(19)

Europäisches
Patentamt
European
Patent Office
Office européen
des brevets

(11) **EP 3 150 658 A1**

(12) **EUROPEAN PATENT APPLICATION**
published in accordance with Art. 153(4) EPC

(43) Date of publication:
**05.04.2017 Bulletin 2017/14**

(21) Application number: **15800575.1**

(22) Date of filing: **28.05.2015**

(51) Int Cl.:
*C08J 9/06* (2006.01)     *C08K 3/34* (2006.01)
*C08L 9/06* (2006.01)     *C08L 23/10* (2006.01)
*C08L 53/00* (2006.01)

(86) International application number:
**PCT/JP2015/065464**

(87) International publication number:
**WO 2015/182721 (03.12.2015 Gazette 2015/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **30.05.2014 JP 2014112261**

(71) Applicant: **Sekisui Techno Molding Co., Ltd.
Tokyo 105-0003 (JP)**

(72) Inventors:
• **SUENAGA, Yuusuke
Nara City
Nara 630-8555 (JP)**

• **KANAMITSU, Yasuji
Nara City
Nara 630-8555 (JP)**
• **AKIYAMA, Takafumi
Nara City
Nara 630-8555 (JP)**
• **MORITA, Kazuhiro
Nara City
Nara 630-8555 (JP)**

(74) Representative: **Ter Meer Steinmeister & Partner
Patentanwälte mbB
Nymphenburger Straße 4
80335 München (DE)**

(54) **FOAM-MOLDED ARTICLE AND METHOD FOR MANUFACTURING SAME**

(57)    Provided is a method for producing a foam-molded article that has excellent rigidity, impact resistance, and external appearance, and is capable of ductile fracture. The method for producing a foam-molded article of the present invention includes a kneading step of melt-kneading a resin composition in the presence of a foaming agent, the resin composition containing 100 parts by weight of a propylene-based resin, 1 to 30 parts by weight of an aromatic vinyl-based thermoplastic elastomer, and 1 to 30 parts by weight of an inorganic filler, and a foaming step of injecting the resin composition in a molten state into a mold, to foam and mold the resin composition. The method can produce a foam-molded article that has excellent rigidity, impact resistance, and external appearance, and is capable of ductile fracture.

**EP 3 150 658 A1**

## Description

Technical Field

The present invention relates to a method for producing a foam-molded article that has excellent rigidity, impact resistance, and external appearance, and is capable of ductile fracture, and a foam-molded article obtained by the aforementioned method.

Background Art

Since a molded article of a propylene-based resin has excellent mechanical strength and moldability, the molded article is used for various products such as automobile parts and housings of electronics. In recent years, the propylene-based resin is used for a foam-molded article from the viewpoint of further weight saving of the molded article.

The foam-molded article is produced by injection molding from the viewpoint of productivity (for example, Patent Literature 1). In injection molding, a resin composition containing a propylene-based resin and an inorganic filler is melt-kneaded in the presence of a foaming agent, and is injected in a mold to fill the mold therewith, and the resin composition is foamed therewithin to obtain the foam-molded article. By use of the inorganic filler, the rigidity of the foam-molded article can be enhanced.

Citation List

Patent Literature

Patent Literature 1: Japanese Patent Application Laid-Open No. 2008-142997

Summary of Invention

Technical Problem

However, the impact resistance of the foam-molded article is reduced due to the use of the inorganic filler. Therefore, in the conventional foam-molded article, the rigidity and the impact resistance conflict with each other, and it is desirable that both the rigidity and the impact resistance be excellent.

When the foam-molded article is fractured by application of impact, the foam-molded article results in ductile fracture or brittle fracture. In particular, when the foam-molded article is used for automobile parts, the foam-molded article is desired not only to have the excellent impact resistance but also to result in ductile fracture without brittle fracture. During collision of an automobile, the foam-molded article results in ductile fracture without scattering fragments, and this can secure the safety of passenger.

Further, the foaming agent or a decomposed gas thereof has low solubility in the propylene-based resin. Therefore, in the conventional foam-molded article, it is difficult that fine foamed cells are uniformly dispersed in the conventional foam-molded article. In such a foam-molded article, a decrease in the mechanical strength, such as rigidity and impact resistance, and deterioration of the external appearance are caused.

Therefore, an object of the present invention is to provide a method for producing a foam-molded article that has excellent rigidity, impact resistance, and external appearance, and is capable of ductile fracture, and a foam-molded article obtained by the aforementioned method.

Means for Solving Problem

A method for producing a foam-molded article of the present invention includes: a kneading step of melt-kneading a resin composition in the presence of a foaming agent, the resin composition containing 100 parts by weight of a propylene-based resin, 1 to 30 parts by weight of an aromatic vinyl-based thermoplastic elastomer, and 1 to 30 parts by weight of an inorganic filler; and a foaming step of injecting the resin composition in a molten state into a mold, to foam and mold the resin composition.

A foam-molded article of the present invention is produced by the aforementioned method for producing a foam-molded article, and has an average cell diameter of 10 to 500 $\mu$m.

Advantageous Effects of Invention

According to the production method of the present invention, a foam-molded article that has excellent rigidity, impact resistance, and external appearance, and is capable of ductile fracture can be provided.

Description of Embodiments

[Method for Producing Foam-Molded Article]

The method for producing a foam-molded article of the present invention includes: a kneading step of melt-kneading a resin composition in the presence of a foaming agent, the resin composition containing 100 parts by weight of a propylene-based resin, 1 to 30 parts by weight of an aromatic vinyl-based thermoplastic elastomer, and 1 to 30 parts by weight of an inorganic filler; and a foaming step of injecting the resin composition in a molten state into a mold, to foam and mold the resin composition.

(Propylene-Based Resin)

Examples of the propylene-based resin include a propylene homopolymer and a propylene-$\alpha$-olefin copolymer. The propylene-based resin may be used alone, or two or more kinds thereof may be used in combination. It should be noted that examples of the propylene-based resin does not include elastomers.
In the propylene-$\alpha$-olefin copolymer, $\alpha$-olefin to be copolymerized with propylene is a component other than propylene. Examples thereof include ethylene, 1-butene, 1-pentene, 4-methyl-1-pentene, 1-hexene, 1-octene, 1-nonene, and 1-decene. The propylene-$\alpha$-olefin copolymer may be any of a block copolymer and a random copolymer.
The propylene-based resin is preferably the propylene-$\alpha$-olefin copolymer, more preferably a propylene-ethylene copolymer, and particularly preferably a propylene-ethylene block copolymer. According to the propylene-$\alpha$-olefin copolymer, a foam-molded article in which the impact resistance is enhanced while a decrease in rigidity is suppressed, and ductile fracture is possible can be provided.
The amount of a propylene component contained in the propylene-based resin is preferably 50% by weight or more, more preferably 55 to 98% by weight, and particularly preferably 60 to 95% by weight. The propylene component contained in the amount of 50% by weight or more can secure the excellent mechanical strength of the foam-molded article.
The number average molecular weight of the propylene-based resin is preferably 10,000 to 200,000, more preferably 10,000 to 100,000, and particularly preferably 10,000 to 50,000. The propylene-based resin having the number average molecular weight of 10,000 or more can secure the excellent mechanical strength of the foam-molded article. The propylene-based resin having the number average molecular weight of 200,000 or less can also secure the excellent fluidity of the resin composition during injection molding.
Here, the number average molecular weight of the propylene-based resin means a value in terms of polystyrene measured by a gel permeation chromatography (GPC) method. For example, the value can be measured by the following procedure.
1,000 mL of an o-dichlorobenzene (o-DCB) solution containing dibutyl hydroxy toluene (BHT) (BHT:o-DCB (weight ratio) = 50:50) is first added to 1.5 g of propylene-based resin to obtain a mixed solution. The mixed solution is shaken using a dissolution and filtration device (for example, trade name "DF-8020" manufactured by TOSOH Corporation) at a mixed solution temperature of 145°C and a rotation rate of 25 rpm for 2 hours to dissolve the propylene-based resin in the o-DCB solution. Thus, a measurement sample is obtained. The number average molecular weight of the propylene-based resin in terms of polystyrene can be measured by the GPC method using the resulting measurement sample.
The number average molecular weight of the propylene-based resin can be measured by the GPC method, for example, using the following measurement device under the following measurement conditions.

Measurement device, product name "GPCV2000" manufactured by Waters

Measurement conditions,

Column: ultra stay gel HT807+HT806M+HT806M (three columns are linked, 7.8 $\phi$ in internal diameter x 300 mm in length)
Mobile phase: o-DCB 1.0 mL/min
Sample concentration: 1 mg/mL
Detector: RI(16) Viscmeter
Standard substance: polystyrene (available from TOSOH Corporation, molecular weight: 500 to 8,420,000)

Elution condition: 140°C
SEC Temperature: 140°C

The melt flow rate (MFR) of the propylene-based resin is preferably 30 to 200 g/10 min, and more preferably 40 to 100 g/10 min. The use of the propylene-based resin having the MRF falling within the range can improve the fluidity of the resin composition in the molten state. This can produce the foam-molded article having excellent external appearance.

The MFR of the propylene-based resin is a value measured under conditions of 230°C and a load of 21.18 N in accordance with JIS K7210 (1999).

(Aromatic Vinyl-Based Thermoplastic Elastomer)

The resin composition contains the aromatic vinyl-based thermoplastic elastomer. Use of the aromatic vinyl-based thermoplastic elastomer can allow the foaming agent or a decomposed gas thereof to be highly dissolved in the resin composition during melt-kneading of the resin composition. Therefore, the resulting resin composition having been injected and foamed can provide the foam-molded article in which fine foamed cells are uniformly dispersed. In such a foam-molded article, a decrease in mechanical strength and deterioration of the external appearance are suppressed. In addition, the use of the aromatic vinyl-based thermoplastic elastomer can enhance the adhesion strength between the propylene-based resin and the inorganic filler. Therefore, the foam-molded article, in which a decrease in impact resistance due to addition of the inorganic filler is suppressed and ductile fracture is possible without brittle fracture, can be provided.

Preferable examples of the aromatic vinyl-based thermoplastic elastomer include a copolymer of an aromatic vinyl-based compound with a conjugated diene compound, and a hydrogenated product thereof. The copolymer of an aromatic vinyl-based compound with a conjugated diene compound may be any of a random copolymer and a block copolymer, and a block copolymer of an aromatic vinyl-based compound with a conjugated diene compound is preferred. The aromatic vinyl-based thermoplastic elastomer may be used alone, or two or more kinds thereof may be used in combination.

Examples of the aromatic vinyl-based compound include styrene, $\alpha$-methylstyrene, $\beta$-methylstyrene, p-methylstyrene, tert-butylstyrene, and methoxystyrene. Among these, styrene is preferred.

Examples of the conjugated diene compound include 1,3-butadiene, isoprene, 2,3-dimethyl-1,3-butadiene, 1,3-pentadiene, 2-methyl-1,3-pentadiene, 1,3-hexadiene, 4,5-diethyl-1,3-octadiene, and 3-butyl-1,3-octadiene. Among these, 1, 3-butadiene and isoprene are preferred.

Specific examples of the aromatic vinyl-based thermoplastic elastomer include a styrene-butadiene copolymer, a styrene-butadiene-styrene copolymer (SBS), a styrene-isoprene-styrene copolymer (SIS), a styrene-ethylene/butylene-styrene copolymer (SEBS), a styrene-ethylene/propylene-styrene copolymer (SEPS), and a styrene-ethylene-ethylene/propylene-styrene copolymer (SEEPS).

It is preferable that the aromatic vinyl-based thermoplastic elastomer be the hydrogenated product of the copolymer of the aromatic vinyl-based compound with the conjugated diene compound. A styrene-ethylene/butylene-styrene copolymer (SEBS), a styrene-ethylene/propylene-styrene copolymer (SEPS), and a styrene-ethylene-ethylene/propylene-styrene copolymer (SEEPS) are more preferred. A styrene-ethylene/butylene-styrene copolymer (SEBS) is particularly preferred. Use of the hydrogenated product can provide the foam-molded article that can exert excellent impact resistance over a wide temperature range of low temperature to normal temperature.

The amount of the aromatic vinyl-based compound contained in the copolymer of the aromatic vinyl-based compound with the conjugated diene compound is preferably 10 to 30% by weight, and more preferably 15 to 25% by weight. The aromatic vinyl-based compound contained in an amount falling within the range can provide the foam-molded article that has excellent impact resistance and rigidity and is capable of ductile fracture.

The melt flow rate (MFR) of the aromatic vinyl-based thermoplastic elastomer is preferably 0.1 to 40 g/10 min, and more preferably 1 to 20 g/10 min. The aromatic vinyl-based thermoplastic elastomer having the MFR of 0.1 g/10 min or more can secure the excellent fluidity of the resin composition during injection molding. The aromatic vinyl-based thermoplastic elastomer having the MFR of 40 g/10 min or less can also secure the excellent rigidity of the foam-molded article.

The MFR of the aromatic vinyl-based thermoplastic elastomer is a value measured under conditions of 230°C and a load of 21.18 N in accordance with JIS K7210 (1999).

The amount of the aromatic vinyl-based thermoplastic elastomer contained in the resin composition is 1 to 30 parts by weight, preferably 1 to 20 parts by weight, and more preferably 1 to 15 parts by weight, relative to 100 parts by weight of the propylene-based resin. The aromatic vinyl-based thermoplastic elastomer contained in an amount of 1 part by weight or more can provide the foam-molded article that can exert excellent impact resistance not only at normal temperature but also at low temperature. The aromatic vinyl-based thermoplastic elastomer contained in an amount of 30 parts by weight or less can also secure the excellent rigidity of the foam-molded article.

(Olefin-based thermoplastic elastomer)

It is preferable that the resin composition further contain an olefin-based thermoplastic elastomer. Use of the olefin-based thermoplastic elastomer can further improve the rigidity and impact resistance of the foam-molded article.
Examples of the olefin-based thermoplastic elastomer include (1) an elastomer obtained by using an olefin-based resin such as polypropylene and polyethylene as a hard segment, using an ethylene-propylene-based rubber (for example, EPM and EPDM) as a soft segment, and mixing the olefin-based resin and the ethylene-propylene-based rubber, and (2) an ethylene-$\alpha$-olefin copolymer elastomer. Among these, an ethylene-$\alpha$-olefin copolymer elastomer is preferred. The olefin-based thermoplastic elastomer may be used alone, or two or more kinds thereof may be used in combination.
Examples of $\alpha$-olefin in the ethylene-$\alpha$-olefin copolymer elastomer include $\alpha$-olefin having 4 to 20 carbon atoms. Example of such $\alpha$-olefin include 1-butene, isobutene, 1-pentene, 2-methyl-1-butene, 3-methyl-1-butene, 1-hexene, 2-methyl-1-pentene, 3-methyl-1-pentene, 4-methyl-1-pentene, 1-octene, 1-nonene, 1-decene, 1-undecene, and 1-dodecene. The $\alpha$-olefin may be used alone, or two or more kinds thereof may be used in combination. Among these, 1-butene, 1-hexene, and 1-octene are preferred, and 1-octene is more preferred. Use of the ethylene-1-octene copolymer elastomer can further enhance both the impact resistance and the rigidity of the foam-molded article.
The amount of the $\alpha$-olefin component contained in the ethylene-$\alpha$-olefin copolymer elastomer is preferably 5 to 30% by weight, and more preferably 10 to 25% by weight. The $\alpha$-olefin component contained in an amount of 5% by weight or more can enhance the impact resistance of the foam-molded article. The $\alpha$-olefin component contained in an amount of 30% by weight or less can also secure the excellent rigidity of the foam-molded article.
The density of the ethylene-$\alpha$-olefin copolymer elastomer is preferably 0.85 to 0.95 g/cm$^3$, and more preferably 0.86 to 0.88 g/cm$^3$. Use of the ethylene-$\alpha$-olefin copolymer elastomer having the density falling with the range can further enhance the impact resistance and the rigidity of the foam-molded article.
The density of the ethylene-$\alpha$-olefin copolymer elastomer is a value measured in accordance with ASTM D792.
The number average molecular weight of the ethylene-$\alpha$-olefin copolymer elastomer is preferably 10,000 to 500,000, more preferably 10,000 to 300,000, and particularly preferably 20,000 to 200,000. The ethylene-$\alpha$-olefin component elastomer having the number average molecular weight of 10,000 or more can secure the excellent rigidity of the foam-molded article. The ethylene-$\alpha$-olefin component elastomer having the number average molecular weight of 500,000 or less can also secure the excellent fluidity of the resin composition during injection molding.
The number average molecular weight of the ethylene-$\alpha$-olefin copolymer elastomer can be measured in the same manner as the method for measuring the number average molecular weight of the propylene-based resin described above.
The ethylene-$\alpha$-olefin copolymer elastomer can be produced by polymerizing ethylene and $\alpha$-olefin in the presence of a catalyst. Examples of the catalyst include a Ziegler-Natta catalyst including an organoaluminum compound and a halogenated ester compound, a vanadium compound, and a metallocene catalyst. A metallocene catalyst is preferred. Examples of the metallocene catalyst include a catalyst in which a metallocene compound in which a titanium atom, a zirconium atom, or a hafnium atom is coordinated with one or more kinds of group having a cyclopentadienyl anion skeleton is combined with alumoxane or a boron compound.
As a method for producing the ethylene-$\alpha$-olefin copolymer elastomer, a publicly known method can be used. For example, a method described in Japanese Translation of PCT International Application Publication No. Hei. 07-500622, or the like, may be used.
The amount of the olefin-based thermoplastic elastomer contained in the resin composition is 1 to 30 parts by weight, preferably 5 to 30 parts by weight, and more preferably 10 to 20 parts by weight, relative to 100 parts by weight of the propylene-based resin. The olefin-based thermoplastic elastomer contained in an amount of 1 part by weight or more can enhance the impact resistance of the foam-molded article. The olefin-based thermoplastic elastomer contained in an amount of 30 parts by weight or less can also secure the excellent rigidity of the foam-molded article.

(Inorganic Filler)

The resin composition further contains the inorganic filler. Use of the inorganic filler can enhance the rigidity of the foam-molded article.
Examples of the inorganic filler include a nonfibrous inorganic filler such as calcium silicate (wollastonite, and xonotlite), talc, calcium carbonate, mica, clay, montmorillonite, bentonite, activated clay, sepiolite, imogolite, sericite, glass beads, silica balloons, and glass flakes, and a fibrous inorganic filler such as glass fibers, silica fibers, and carbon fibers. The inorganic filler may be used alone, or two or more kinds thereof may be used in combination. Among these, talc, mica, and a fibrous inorganic filler are preferred, and talc, mica, and glass fibers are more preferred. Use of any of talc, mica, and the fibrous inorganic filler can provide the foam-molded article that has excellent impact resistance and rigidity. Examples of the mica include white mica, gold mica, and black mica. Gold mica and white mica are preferred, and white mica is more preferred.

The average particle diameter of the talc is preferably 0.1 to 20 $\mu$m, more preferably 2 to 15 $\mu$m, and particularly preferably 2 to 10 $\mu$m. The talc having an average particle diameter of 0.1 $\mu$m or more can be finely dispersed in the resin composition. This can secure the excellent impact resistance of the foam-molded article. Use of the talc having an average particle diameter of 20 $\mu$m or less can also enhance the rigidity of the foam-molded article.

The average particle diameter of the mica is preferably 2 to 300 $\mu$m, and more preferably 2 to 80 $\mu$m. The mica having an average particle diameter of 2 $\mu$m or more can be finely dispersed in the resin composition. This can secure the excellent impact resistance of the foam-molded article. Use of the mica having an average particle diameter of 300 $\mu$m or less can also enhance the rigidity of the foam-molded article.

The average aspect ratio of the mica is preferably 10 or more, and more preferably 15 or more. The mica having the average aspect ratio of 10 or more, the mica can be finely dispersed in the resin composition. This can secure the excellent impact resistance of the foam-molded article. The average aspect ratio of the mica is preferably 200 or less, and more preferably 100 or less. The mica having the average aspect ratio of 200 or less can enhance the rigidity of the foam-molded article.

A value measured using a laser diffraction/scattering particle size analyzer is used as the average particle diameter of the inorganic filler. For example, the average particle diameter of the inorganic filler can be measured as follows. The inorganic filler is first added to an ethanol aqueous solution (containing 50% by weight of ethanol) so that the concentration of the inorganic filler is 2% by weight, and the mixture is then irradiated with ultrasonic wave for 30 minutes at an output of 1 kw using an ultrasonic homogenizer to obtain a suspension liquid. The volume particle size distribution of the inorganic filler in the suspension liquid is then measured by a laser diffraction/scattering particle size analyzer (for example, product name "Microtrac MT3300" manufactured by NIKKISO CO., LTD.). A value of cumulative 50% of the volume particle size distribution is calculated as an average particle diameter of the inorganic filler.

The aspect ratio of a nonfibrous inorganic filler refers to a ratio of width of secondary particle to thickness of the secondary particle (width of secondary particle/thickness of secondary particle). The average aspect ratio of the nonfibrous inorganic filler is measured by the following procedure. Any 20 secondary particles of inorganic filler are extracted. The width and thickness of the secondary particles of the inorganic filler are measured by observation with a scanning electron microscope. The width of the secondary particles of the inorganic filler represents a diameter of perfect circle having the smallest diameter that can surround the secondary particles when the secondary particles are observed in a direction in which the area of the secondary particles is the largest. The thickness of the secondary particles of the inorganic filler represents the largest thickness of the secondary particles in the direction in which the area of the secondary particles is the largest. The aspect ratio of each of the secondary particles of the inorganic filler is calculated. The arithmetic average of the aspect ratios is then obtained to be used as the average aspect ratio of the nonfibrous inorganic filler.

The nonfibrous inorganic filler may be surface-treated with a surface treatment agent such as a fatty acid in order to improve the dispersibility in the resin composition.

There is no particular limitation on glass fibers. Examples of kind of glass used in the glass fibers include E-glass, C-glass, A-glass, and S-glass. E-glass is preferred. A method of producing the glass fibers is not particularly limited, and the glass fibers are produced by a publicly known method. The glass fibers may be used alone, or two or more kinds thereof may be used in combination.

The fiber length of the fibrous inorganic filler is preferably 0.5 to 100 mm, and more preferably 1 to 10 mm. The fibrous inorganic filler having the length of 0.5 mm or more can enhance the rigidity and the impact resistance of the foam-molded article. The fibrous inorganic filler having the length of 100 mm or less can secure the excellent fluidity of the resin composition during injection molding.

As to the fiber length of the fibrous inorganic filler, any 100 or more fibrous inorganic fillers are extracted, and the fiber length of each of the fibrous inorganic fillers is measured. The arithmetic average of the fiber lengths of the respective fibrous inorganic fillers is obtained to be used as the fiber length of the fibrous inorganic filler. For example, the fibrous inorganic filler is added to water containing a surfactant, and the mixture is stirred so that the fibrous inorganic filler is not broken, to produce a mixed liquid. The resulting mixed liquid is dropped on a glass thin plate and diffused. The fiber lengths of 100 or more fibrous inorganic fillers are measured by a digital microscope (for example, trade name "VHX-900 series" manufactured by KEYENCE CORPORATION), and the arithmetic average of the fiber lengths of the fibrous inorganic fillers is obtained to be used as the fiber length of the fibrous inorganic filler.

The fiber diameter of the fibrous inorganic filler is preferably 3 to 25 $\mu$m, and more preferably 6 to 20 $\mu$m. The fibrous inorganic filler having the fiber diameter of 3 $\mu$m or more prevents damage of the inorganic filler during the production step, and the foam-molded article has excellent rigidity and impact resistance. The fibrous inorganic filler having the fiber diameter of 25 $\mu$m or less can enhance the rigidity and the impact resistance of the foam-molded article.

The fiber diameter of the fibrous inorganic filler represents the diameter of a cut surface obtained by cutting the inorganic filler along a plane orthogonal to the length direction thereof. The diameter of the cut surface represents the diameter of a perfect circle with the shortest diameter capable of surrounding the cut surface. For example, the fiber diameter of the fibrous inorganic filler is measured by the following procedure. 100 or more fibrous inorganic fillers are extracted. Each fibrous inorganic filler is cut along a plane orthogonal to the length direction thereof, and the diameter of each cut surface is measured. The arithmetic average of the fiber diameters of the respective fibrous inorganic fillers is calculated. The arithmetic average is used as the fiber diameter of the fibrous inorganic filler.

The fibrous inorganic filler may be surface-treated in order to improve the dispersibility in the resin composition. Preferable examples of a surface treatment agent for surface-treating the fibrous inorganic filler include an organic silane coupling agent, a titanate coupling agent, an aluminate coupling agent, a zirconate coupling agent, a silicone compound, a higher fatty acid, a metal salt of fatty acid, and a fatty acid ester.

Examples of the organic silane coupling agent include vinyltrimethoxysilane, $\gamma$-chloropropyltrimethoxysilane, $\gamma$-methacryloxypropyltrimethoxysilane, $\gamma$-aminopropyltrimethoxysilane, and 3-acryloxypropyltrimethoxysilane. Examples of the titanate coupling agent include isopropyltriisostearoyl titanate, isopropyltris(dioctylpyrophosphate) titanate, and isopropyltri(N-aminoethyl) titanate.

Examples of the aluminate coupling agent include acetoalkoxy aluminum diisopropylate.

Examples of the zirconate coupling agent include zirconium lactate, and acetylacetone zirconium butyrate.

Examples of the silicone compound include silicone oil and silicone resin.

Examples of the higher fatty acid include oleic acid, capric acid, lauric acid, palmitic acid, stearic acid, montanic acid, caleic acid, linoleic acid, rosin acid, linolenic acid, undecanoic acid, and undecenic acid.

Examples of the metal salt of a fatty acid include a sodium salt, a lithium salt, a calcium salt, a magnesium salt, a zinc salt, and an aluminum salt of fatty acid having 9 or more carbon atoms (for example, stearic acid, and montanic acid). Calcium stearate, aluminum stearate, calcium montanate, and sodium montanate are preferred.

Examples of the fatty acid ester include a polyhydric alcohol fatty acid ester such as a glycerin fatty acid ester, an $\alpha$-sulfone fatty acid ester, a polyoxyethylene sorbitan fatty acid ester, a sorbitan fatty acid ester, a polyethylene fatty acid ester, and a sucrose fatty acid ester.

The amount of surface treatment agent to be used is preferably 0.01 to 5 parts by weight, and more preferably 0.1 to 3 parts by weight, relative to 100 parts by weight of the fibrous inorganic filler.

The fibrous inorganic filler may be sized (surface-treated) with a sizing agent. Examples of kinds of the sizing agent include an epoxy-based sizing agent, an aromatic urethane-based sizing agent, an aliphatic urethane-based sizing agent, an acrylic sizing agent, and a maleic anhydride-modified polyolefin-based sizing agent. It is preferable that the sizing agent be melted at 200°C or lower since the sizing agent needs to be melted during melt-kneading of the resin composition.

The fibrous inorganic filler may have a chopped strand shape, which is obtained by cutting fiber raw yarn into a desirable length.

The amount of the inorganic filler contained in the resin composition is 1 to 30 parts by weight, preferably 5 to 30 parts by weight, and more preferably 15 to 30 parts by weight, relative to 100 parts by weight of the propylene-based resin. The inorganic filler contained in an amount falling within the range can provide the foam-molded article that suppresses a decrease in impact resistance and has improved rigidity.

(Fluidity Improver)

It is preferable that the resin composition further contain a fluidity improver. Use of the fluidity improver can suppress occurrence of external appearance defect such as silver streak in the foam-molded article.

Examples of the fluidity improver include an olefin-based wax such as a polyethylene wax and a polypropylene wax, and metal soap. One kind of the fluidity improver may be used alone or two or more kinds thereof may be used in combination. It is preferable that the fluidity improver be a polyethylene wax. Use of the polyethylene wax can provide the foam-molded article that has excellent impact resistance and rigidity. Examples of the polyethylene wax. include a polymerization-type wax obtained by polymerization of ethylene, and a thermal decomposition-type wax obtained by thermal decomposition of low density polyethylene.

The number average molecular weight of the polyethylene wax is preferably 1,000 to 5,000. Use of the polyethylene wax having a number average molecular weight of 1,000 or more can secure the excellent surface hardness, scratch resistance, and rigidity of the foam-molded article. Use of the polyethylene wax having a number average molecular weight of 5,000 or less can reduce an excessive increase in the hardness in the foam-molded article, and can secure the excellent impact resistance thereof.

The number average molecular weight of the polyethylene wax can be measured in the same manner as the method for measuring the number average molecular weight of the propylene-based resin described above.

The amount of the fluidity improver contained in the resin composition is preferably 1 to 4 parts by weight relative to 100 parts by weight of the propylene-based resin. The fluidity improver contained in an amount of 1 part by weight or more can secure the effects obtained using the fluidity improver. The fluidity improver contained in an amount of 4 parts by weight or less can maintain an excellent fine dispersion state of foamed cells. This can secure the excellent mechanical strength of the foam-molded article.

The resin composition may further contain another additive(s). Examples of the other additives include an antioxidant, a foaming aid, a foaming nucleating agent, a foam-molding stabilizer, an ultraviolet absorber, an antistatic agent, a lubricant, and a flame retardant.

(Foaming Agent)

In the method of the present invention, the aforementioned resin composition is melt-kneaded in the presence of the foaming agent (kneading step). A foaming agent conventionally used can be used. Examples of the foaming agent include a chemical foaming agent such as sodium hydrogen carbonate, ammonium carbonate, a nitroso compound (dinitrosopentamethylenetetramine, etc.), an azo compound (azodicarbonamide, etc.), a sulfonyl hydrazide compound, hydrazodicarbonamide, and sodium hydrogen carbonate; and a physical foaming agent such as a saturated aliphatic hydrocarbon such as propane, n-butane, isobutane, cyclobutane, n-pentane, isopentane, and hexane, an ether such as dimethyl ether, methyl chloride, 1,1,1,2-tetrafluoroethane, 1,1-difluoroethane, fron such as monochlorodifluoromethane, carbon dioxide, and nitrogen. The foaming agent may be used alone, or two or more kinds thereof may be used in combination.

It is more preferable that the physical foaming agent be used in a supercritical state. Use of the physical foaming agent in the supercritical state can form fine foamed cells in the foam-molded article, and can enhance the mechanical strength and external appearance of the foam-molded article.

A timing when the foaming agent is added is not particularly limited. When the chemical foaming agent is used, the chemical foaming agent may be added to the resin composition in advance. The chemical or physical foaming agent may be added to the resin composition during melt-kneading.

The amount of the foaming agent contained in the resin composition is preferably 0.1 to 10 parts by weight, and more preferably 1 to 8 parts by weight, relative to 100 parts by weight of the propylene-based resin. The foaming agent contained in an amount of 0.1 parts by weight or more can foam the resin composition at a high foaming ratio, to decrease the weight of the foam-molded article. The foaming agent contained in an amount of 10 parts by weight or less can suppress coarsening of foamed cells, to obtain the foam-molded article in which fine foamed cells are uniformly dispersed.

In the method of the present invention, the aforementioned resin composition is melt-kneaded in the presence of the foaming agent (kneading step). This causes the resin composition to be in a melted state. The melt-kneading may be performed by a publicly known means such as an extruder. The temperature of the resin composition during melt-kneading may be 190 to 250°C. However, in the method of the present invention, use of the aromatic vinyl-based thermoplastic elastomer can increase the temperature of the resin composition during melt-kneading. Furthermore, the foaming agent or a decomposed gas thereof can be uniformly dispersed in the resin composition. Therefore, this can provide the foam-molded article in which foamed cells are uniformly and highly dispersed without breaking. Accordingly, the temperature of the resin composition during melt-kneading is preferably 210 to 250°C, and more preferably 230 to 250°C. The temperature setting of the resin composition during melt-kneading at 250°C or lower can suppress thermal degradation of the propylene-based resin, to secure the excellent mechanical strength of the foam-molded article.

After the resin composition is melt-kneaded in the presence of the foaming agent, the resin composition is injected into a mold, resulting in foaming and molding (foaming step). The resin composition in the mold may be foamed and molded by a publicly known method, and preferably by a core back process. For example, the core back process can be performed as follows. After the resin composition is melt-kneaded in the presence of the foaming agent, the resin composition in the melted state is injected into a cavity defined by a stationary mold and a movable mold to fill the cavity therewith. Subsequently, the movable mold is retracted to increase the internal volume of the cavity, thereby decreasing the pressure in the cavity. This causes the resin composition in the melted state to be foamed. Thus, the foam-molded article can be obtained. The core back process can control the temperature and pressure of the resin composition during foaming, to make foamed cells in the obtained foam-molded article finer.

The present invention may adopt a counterpressure process during injection molding of the resin composition. The counterpressure process includes injecting a gas in the cavity of the mold in advance before the resin composition is injected into the cavity to fill the cavity therewith. Thus, the resin composition can be injected into the cavity while foaming in a surface of the resin composition is suppressed by the pressure of the gas. The counterpressure process can suppress occurrence of external appearance defect such as silver streak in the foam-molded article.

The temperatures of the stationary mold and the movable mold are preferably 20 to 100°C, and more preferably 30 to 90°C. The temperature settings of the stationary mold and the movable mold at 20°C or higher can suppress occurrence of external appearance defect such as silver streak and a void in the surface of the foam-molded article. As long as the temperatures fall within the temperature range, the temperatures of the stationary mold and the movable mold may be different from each other.

The injection time is preferably 0.5 to 5.0 seconds, and more preferably 1.0 to 3.0 seconds. Too short injection time may cause the internal pressure in the cavity during filling to be excessively low. Too low internal pressure of the cavity cannot cause the pressure in the cavity during retraction of the movable mold to be sufficiently low. Further, growth of cell nuclei may preferentially occur as compared with generation of cells, to coarsen foamed cells in the foam-molded article. Too long injection time may cause the temperature of the resin composition in the cavity to be excessively decreased, so that the resin composition cannot be sufficiently foamed.

The injection rate is preferably 30 to 10,000 mm/sec, more preferably 50 to 5,000 mm/sec, and particularly preferably 50 to 500 mm/sec. The injection rate falling within the range can reduce the external appearance defect due to occurrence of silver streak, a sink mark, and a void.

The back pressure may be 5 to 30 MPa. However, in the method of the present invention, use of the aromatic thermoplastic elastomer can increase the back pressure. Furthermore, this can uniformly disperse the foaming agent or a decomposed gas thereof in the resin composition. Therefore, the foam-molded article, in which fine foamed cells are uniformly and highly dispersed without breaking, can be provided. Accordingly, the back pressure is preferably 15 to 25 MPa, and more preferably 20 to 25 MPa. Herein, the back pressure means a pressure to be applied to a screw in an injection molding device.

The retracting start time of the movable mold may be 0 to 5 seconds. The retracting start time of the movable mold means a time between a time of filling the cavity with the resin composition and a time of initiating retraction of the movable mold. The resin composition may be foamed by retracting the movable mold at a temperature at which the resin composition expresses viscoelasticity. Since the temperature range at which the propylene-based resin expresses viscoelasticity is narrow, the retracting start time of the movable mold must be shortened. However, in the present invention, use of the aromatic thermoplastic elastomer can widen the temperature range at which the resin composition expresses viscoelasticity, so that the retracting start time can be increased. Therefore, even when the retracting start time of the movable mold is 2 to 5 seconds, excellent viscoelasticity of the resin composition can be maintained, and the resin composition can be sufficiently foamed.

The retracting rate of the movable mold is preferably 1 to 30 mm/sec, more preferably 1 to 20 mm/sec, and particularly preferably 3 to 10 mm/sec. The retracting rate of the movable mold falling within the range can cause the resin composition to be sufficiently foamed. Therefore, the foam-molded article can have the excellent mechanical strength.

When the resin composition is foamed and molded by the counterpressure process, the internal pressure of the cavity before injection and filling with the resin composition is preferably 0.8 to 2.5 MPa, and more preferably 1 to 2 MPa. The cavity with the internal pressure of 0.8 MPa or more can suppress occurrence of external appearance defect such as silver streak in the foam-molded article. The cavity with the internal pressure of 2.5 MPa or less can suppress occurrence of external appearance defect caused by irregularities such as pitting in the foam-molded article.

[Foam-Molded Article]

The method of the present invention can provide the foam-molded article that has excellent rigidity, impact resistance, and external appearance. In the method of the present application, as described above, the use of the aromatic vinyl-based thermoplastic elastomer can enhance the adhesion strength between the propylene-based resin and the inorganic filler. Therefore, in such a foam-molded article, a decrease in impact resistance due to addition of the inorganic filler can be suppressed and the rigidity can be enhanced.

Further, the use of the aromatic vinyl-based thermoplastic elastomer can allow fine foamed cells to be uniformly and highly dispersed in the foam-molded article. Therefore, such a foam-molded article can exert the excellent impact resistance not only at normal temperature but also at low temperature during winter. When impact is applied to the foam-molded article, brittle fracture can be suppressed, and ductile fracture can be achieved. Thus, the foam-molded article can suppress scattering of fragments thereof. Further, the fine foamed cells uniformly and highly dispersed therein can suppress occurrence of external appearance defect such as irregularities and silver streak in the surface of the foam-molded article.

The apparent density of the foam-molded article is preferably 0.1 to 0.9 g/cm$^3$, and more preferably 0.1 to 0.5 g/cm$^3$. The apparent density falling within the range can secure the excellent impact resistance and rigidity of the foam-molded article.

The apparent density of the foam-molded article can be measured in accordance with JIS K7211-2. In the measurement, for example, trade name "Digimatic Caliper" manufactured by Mitutoyo Corporation (error e = 0.01), or the like may be used as a vernier caliper, and trade name "GX200" manufactured by A&D Company, Limited (error e = 0.01), or the like may be used as a meter.

The average cell diameter of the foam-molded article is preferably 10 to 500 $\mu$m, and more preferably 10 to 100 $\mu$m. In the method of the present invention, the use of the aromatic vinyl-based thermoplastic elastomer as described above can provide the foam-molded article containing fine foamed cells. Therefore, the average cell diameter of the foamed cells contained in the foam-molded article may fall within the range. The average cell diameter falling within the range can secure the excellent impact resistance of the foam-molded article.

The average cell diameter of the foam-molded article can be measured as follows. The foam-molded article is first cut in a thickness direction. Subsequently, a cross section of the foam-molded article is photographed at a magnification of 100 by a microscope (for example, product name "profile scanning laser microscope" manufactured by KEYENCE CORPORATION) to obtain a photograph. From cells appearing in the cross section of the foam-molded article of the photograph, at least 20 cells are optionally extracted. The cell diameters of the extracted cells are measured. The average cell diameter of the foam-molded article can be obtained by calculating the arithmetic average of the measured values. The cell diameter of cell means the diameter of a perfect circle with the shortest diameter capable of surrounding the cell. During measurement of the cell diameter, the cell diameter is judged on the basis of only cross section of the cells appearing in the photograph.

The foam-molded article obtained by injection molding has a foaming layer and a non-foaming skin layer that is integrally formed on top and bottom surfaces of the foaming layer. When the resin composition is injected into the cavity of the mold to fill the cavity therewith, the non-foaming skin layer is formed by cooling a surface part of the resin composition due to the interior surface of the cavity.

The ratio of the thickness of the foaming layer to the total thickness of the foam-molded article is preferably 50 to 95%, more preferably 70 to 95%, and particularly preferably 80 to 90%. The foaming layer having the ratio of the thickness of 50% or more can secure the excellent impact resistance of the foam-molding article. The foaming layer having the ratio of the thickness of 95% or less can secure the excellent rigidity of the foam-molding article.

The ratio of the thickness of the foaming layer to the total thickness of the foam-molded article can be measured as follows. The foam-molded article is first cut in the thickness direction. Subsequently, a cross section of the foam-molded article is photographed at a magnification of 100 by a microscope (for example, product name "profile scanning laser microscope" manufactured by KEYENCE CORPORATION) to obtain a photograph. From the obtained photograph, the total thickness of the foam-molded article is measured on at least 10 positions, optionally. The total thickness $T_1$ (mm) of the foam-molded article is obtained by calculating the arithmetic average of the measured values. From the photograph, the thickness of the foaming layer is measured on at least 10 positions, optionally. The thickness $T_2$ (mm) of the foaming layer is obtained by calculating the arithmetic average of the measured values. The ratio of the thickness of the foaming layer to the total thickness of the foam-molded article can be obtained by the following formula.

$$\texttt{Ratio of thickness of foaming layer to total thickness of}$$

$$\texttt{foam-molded article (\%) = 100} \times \texttt{T}_2\texttt{/T}_1$$

The foam-molded article of the present invention can be used in various applications. Examples of the applications include automobile interior parts such as a door trim, a pillar trim, various box lids, an instrument panel, and a sun visor; automobile exterior parts such as a tire house, an undercover, a side protect mall, a bumper, a soft fascia, and a mudguard; a seat for a motorcycle; parts in various products such as furniture, architecture materials, consumer electronics, and electronics; containers for transportation; and buffer materials. In particular, it is preferable that the foam-molded article of the present invention be used in automobile interior parts and exterior parts since the foam-molded article has excellent lightweight property, mechanical strength, rigidity, and external appearance.

[Examples]

Hereinafter, the present invention will be more specifically described with reference to Examples, but the present invention is not limited to the Examples.

(Examples 1 to 3, Examples 5 to 9, and Comparative Examples 1 to 5)

1. Melt-kneading

A propylene-based resin (propylene-ethylene block copolymer, content of propylene component: 92% by weight, number average molecular weight: 30,000, MFR: 75 g/10 min, trade name "NOVATEC PP BC08F" available from Japan Polypropylene Corporation), a styrene-ethylene/butylenes-styrene copolymer (SEBS, content of styrene component: 18% by weight, MFR: 4.5 g/10 min, trade name "Tuftec 1062" available from Asahi Kasei Chemicals Corp.), an ethylene-1-octene copolymer elastomer obtained by polymerization in the presence of a metallocene catalyst (content of 1-octene component: 24% by weight, density: 0.87 g/cm$^3$, number average molecular weight: 30,000, trade name "ENGAGE 8100" available from The Dow Chemical Company), talc (average particle diameter: 10 $\mu$m), calcium carbonate (average particle diameter: 0.2 $\mu$m), and sodium hydrogen carbonate (trade name "SM3274" available from Sankyo Kasei Co., Ltd.) in respective mixing amounts shown in Tables 1 and 2 were placed in a heating cylinder through a hopper of an extruder and mixed, to obtain a resin composition. The resin composition was melt-kneaded in the heating cylinder at 230°C to obtain the resin composition in a melted state.

2. Injection Foaming and Molding

A stationary mold and a movable mold were heated to 40°C, and clamped, to form a cavity with a gap of 1.3 mm. The resin composition in the melted state was injected into the cavity for an injection time of 3.0 seconds at an injection rate of 90 mm/sec and a back pressure of 20 MPa to fill the cavity therewith. 0.5 seconds after completion of filling, the movable mold started to be retracted. The movable mold was retracted at a retracting rate of 5 mm/sec so that the gap of the cavity was 2.6 mm, and the pressure in the cavity was reduced. Thus, the resin composition in the melted state was foamed to obtain a foam-molded article. After that, the foam-molded article was cooled and taken out from the cavity. The foam-molded article had a plate shape with a thickness of 2.6 mm and an apparent density of 0.5 g/cm$^3$.

(Example 4)

A foam-molded article was produced in the same manner as in Example 1 except that a resin composition in a melted state was obtained by the following procedure.

1. Melt-kneading

A propylene-based resin (propylene-ethylene block copolymer, content of propylene component: 92% by weight, number average molecular weight: 30,000, MFR: 75 g/10 min, trade name "NOVATEC PP BC08F" available from Japan Polypropylene Corporation), a styrene-ethylene/butylenes-styrene copolymer (SEBS, content of styrene component: 18% by weight, MFR: 4.5 g/10 min, trade name "Tuftec 1062" available from Asahi Kasei Chemicals Corp.), an ethylene-1-octene copolymer elastomer obtained by polymerization in the presence of a metallocene catalyst (content of 1-octene component: 24% by weight, density: 0.87 g/cm$^3$, number average molecular weight: 30,000, trade name "ENGAGE 8100" available from The Dow Chemical Company), and talc (average particle diameter: 10 $\mu$m) in respective mixing amounts shown in Table 1 were placed in a heating cylinder through a hopper of an extruder and mixed, to obtain a resin composition. While carbon dioxide was heated to a temperature of 20°C, a pressure of 20 MPa was applied to carbon dioxide, to obtain carbon dioxide in a supercritical state. The carbon dioxide in the supercritical state was supplied to the heating cylinder at a gas injection pressure of 17 MPa, an injection time of 8 seconds, and a flow rate of 0.25 kg/hr so that the amount was one shown in Table 1. After that, the resin composition was melt-kneaded in the heating cylinder at 230°C in the presence of the carbon dioxide in the supercritical state to obtain the resin composition in the melted state.

(Examples 10 to 15)

Each foam-molded article was produced in the same manner as in Example 6 except that in injection foam-molding, the temperature of the resin composition during melt-kneading, the temperatures of the stationary mold and the movable mold, the injection time, the back pressure, the time between completion of filling and onset of retraction of the movable mold, and the retracting rate of the movable mold were each changed as shown in Table 3.

(Examples 16 to 22)

1. Melt-kneading

A propylene-based resin (propylene-ethylene block copolymer, content of propylene component: 92% by weight, number average molecular weight: 30,000, MFR: 75 g/10 min, trade name "NOVATEC PP BC08F" available from Japan Polypropylene Corporation), a styrene-ethylene/butylenes-styrene copolymer (SEBS, content of styrene component: 18% by weight, MFR: 4.5 g/10 min, trade name "Tuftec 1062" available from Asahi Kasei Chemicals Corp.), an ethylene-1-octene copolymer elastomer obtained by polymerization in the presence of a metallocene catalyst (content of 1-octene component: 24% by weight, density: 0.87 g/cm$^3$, number average molecular weight: 30,000, trade name "ENGAGE 8100" available from The Dow Chemical Company), talc (average particle diameter: 10 $\mu$m), white mica (average particle diameter: 30 $\mu$m, average aspect ratio: 28), glass fibers (fiber length: 1 mm, fiber diameter: 10 $\mu$m), a polyethylene wax (thermal decomposition-type wax obtained by thermal decomposition of low density polyethylene, number average molecular weight: 3,900), and sodium hydrogen carbonate (trade name "SM3274" available from Sankyo Kasei Co.,

Ltd.) in respective mixing amounts shown in Table 4 were placed in a heating cylinder through a hopper of an extruder and mixed, to obtain a resin composition. The resin composition was melt-kneaded in the heating cylinder at 230°C to obtain the resin composition in a melted state.

2. Injection Foam-Molding

A stationary mold and a movable mold were heated to 40°C, and clamped, to form a cavity with a gap of 1.3 mm. In order to use a counterpressure process, nitrogen gas was injected into the cavity, and the internal pressure of the cavity was increased to 1.5 MPa. After that, while the resin composition in the melted state was injected into the cavity for an injection time of 3.0 seconds at an injection rate of 90 mm/sec and a back pressure of 20 MPa to fill the cavity therewith, the pressure in the cavity was reduced. 0.5 seconds after completion of filling, the movable mold was started to be retracted. The movable mold was retracted at a retracting rate of 5 mm/sec so that the gap of the cavity was 2.6 mm, and the pressure in the cavity was reduced. Thus, the resin composition in the melted state was foamed to obtain a foam-molded article. After that, the foam-molded article was cooled and taken out from the cavity. The foam-molded article had a plate shape with a thickness of 2.6 mm and an apparent density of 0.5 g/cm$^3$.
"Mold temperature" in Tables 1 to 4 means temperatures of the stationary mold and the movable mold. The "retracting start time" in Tables 1 to 4 means a time between completion of filling and a time of starting retraction of the movable mold.

(Evaluation)

In the foam-molded article obtained in each of Examples and Comparative Examples, the average cell diameter and the ratio of the thickness of the foaming layer to the total thickness of the foam-molded article were measured in accordance with the above-described procedures. The foam-molded articles obtained in Examples and Comparative Examples were evaluated in accordance with the following procedures. The obtained results are each shown in Tables 1 to 4.

(Bending Elastic Gradient)

The bending elastic gradient of each of the foam-molded articles was measured in accordance with JIS K7171. Specifically, the measurement was as follows. The foam-molded article was first cut to obtain a specimen having a plane rectangle shape (50 mm in length x 150 mm in width). A load was applied to a central part of the foam-molded article at a test rate of 50 mm/min and a distance between fulcrums of 100 mm, to obtain a load (N)-deflection (mm) curve. The load (N) at which the load (N)-deflection (mm) curve was changed only by 10 mm from the initial straight line thereof was measured. From this load and the displacement amount, the bending elastic gradient (N/10 mm) was calculated.

(High-Rate Plane Impact Test)

Each of the foam-molded articles was subjected to a high-rate plane impact test under a temperature environment of 23°C in accordance with JIS K7211-2. Specifically, the measurement was as follows. The foam-molded article was first cut to obtain a specimen having a plane rectangle shape (100 mm in length x 100 mm in width). The specimen was then held with a circular holder of 1 inch having a through hole at a central part thereof, and the holder was attached to a high-rate plane impact tester (product name "EHF-22H-20L" manufactured by Shimadzu Corporation). Subsequently, the specimen was punched with a striker having a spherical end (diameter: 1/2 inches) at a rate of 8.1 m/second. The deformation amount and stress of the specimen were detected. The area integral value was calculated, and the puncture energy was calculated. Five specimens were produced from any parts of the foam-molded article. The puncture energy ΔE (KJ) of each specimen was calculated in accordance with the aforementioned procedure. The arithmetic average of the puncture energies was calculated as the puncture energy ΔE (KJ) of the foam-molded article. As the puncture energy is higher, the impact resistance is more excellent.
In the high-rate plane impact test described above, the fracture state of the foam-molded article was evaluated in accordance with JIS K7211-2. In Tables 1 to 4, "YD," "YS," "YU," and "NY" are each as follows. When the fracture state of the foam-molded article is ductile fracture, not brittle fracture, it is desirable that the fracture state of the foam-molded article be "YD."

YD: yield caused by deep drawing (the slope at the maximum impact force is zero)
YS: yield caused by stable crack (the slope at the maximum impact force is zero)
YU: yield caused by unstable crack (the slope at the maximum impact force is zero)
NY: behavior where yield is not caused

(Low-Temperature Drop-Ball Impact Resistance)

Each foam-molded article was placed on a level surface of a constant temperature chamber of -30°C. An iron ball (weight: 0.5 kg) was naturally dropped onto an upper surface of the foam-molded article from a height of 0.1 m in a vertical direction above the upper surface. The presence or absence of crack in the foam-molded article caused by the dropped iron ball was visually observed. When a crack was not caused in the foam-molded article, an iron ball was naturally dropped onto the upper surface of the foam-molded article from another height higher than the height by 0.05 m in the vertical direction. The presence or absence of crack in the foam-molded article caused by the dropped iron ball was visually observed. Until occurrence of crack in the foam-molded article was confirmed, an iron ball was repeatedly and naturally dropped from further another height higher than each height by 0.05 m. The lowest height (m) of the iron ball at which a crack was caused in the foam-molded article was measured. The low-temperature drop-ball impact strength (J) was calculated by the following formula.

```
Low-temperature drop-ball impact strength (J)

    = lowest height (m) of iron ball × weight (kg) of iron

ball × 9.8 (m/s²)
```

(Voids)

Each of the foam-molded articles was first cut in the thickness direction. Subsequently, a cross section of the foam-molded article was photographed at a magnification of 100 by a microscope (product name "profile scanning laser microscope" manufactured by KEYENCE CORPORATION) to obtain a photograph. The photographing range was a range of rectangle shape with 2.0 mm in length x 20.0 mm in width in the cross section of the foam-molded article. Among cells in the foam-molded article in the photograph, cells having a cell diameter of more than 1.0 mm were extracted as voids. The cell diameter of cell means the diameter of a perfect circle with the shortest diameter capable of surrounding the cell. The cell diameter was determined on the basis of only cross sections of the cells appearing in the photograph. The cross-sectional areas of the extracted voids were measured, and the sum of the obtained measured values was obtained as the total cross-sectional area ($mm^2$) of the voids. The void-forming ratio (%) was then calculated by the following formula.

```
Void-forming ratio (%) =

    100 × total cross-sectional area (mm²) of voids/40.0

(mm²)
```

In Tables 1 to 4, "A," "B," and "C" in the void-forming ratio are as follows.

A: the void-forming ratio is less than 1%.
B: the void-forming ratio is 1 to 10%.
C: the void-forming ratio is more than 10%.

(External Appearance)

Formation of irregularity on upper and lower surfaces of each foam-molded article was visually observed. The color difference ΔL between the upper and lower surfaces of the foam-molded article was measured by a color difference meter. The total area of parts where the color difference ΔL was 0.1 or more was calculated. The occurrence ratio (%) of silver streak was calculated by the following formula.

$$\text{Occurrence ratio (\%) of silver streak} = 100 \times \text{[total area (mm}^2\text{)}$$

$$\text{of parts where color difference } \Delta L \text{ is 0.1 or more]/[total area}$$

$$\text{(mm}^2\text{) of upper and lower surfaces of foam-molded article]}$$

In Tables 1 to 4, "A," "B," "C", "D," and "E" in columns of external appearance are as follows.

A: formation of irregularity was not recognized and the occurrence ratio of silver streak was less than 5%.
B: formation of irregularity was not recognized and the occurrence ratio of silver streak was 5% or more and less than 10%.
C: formation of irregularity was not recognized and the occurrence ratio of silver streak was 10% or more and less than 30%.
D: formation of irregularity was not recognized and the occurrence ratio of silver streak was 30% or more.
E: formation of irregularity was recognized.

[Table 1]

| | | | Example | | | | | | | | |
|---|---|---|---|---|---|---|---|---|---|---|---|
| | | | 1 | 2 | 3 | 4 | 5 | 6 | 7 | 8 | 9 |
| Mixing Amount (Part By Weight) | | Propylene-Based Resin | 100 | 100 | 100 | 100 | 100 | 100 | 100 | 100 | 100 |
| | | SEBS | 20 | 30 | 10 | 10 | 5 | 5 | 5 | 5 | 5 |
| | | Ethylene-1-Octene Copolymer Elastomer | 0 | 0 | 0 | 0 | 5 | 10 | 20 | 10 | 10 |
| | Inorganic Filler | Talc (Average Particle Diameter 10 $\mu$m) | 10 | 10 | 0 | 10 | 10 | 10 | 10 | 15 | 20 |
| | | Calcium Carbonate (Average Particle Diameter 0.2 $\mu$m) | 0 | 0 | 10 | 0 | 0 | 0 | 0 | 0 | 0 |
| | Foaming Agent | Sodium Hydrogen Carbonate | 3 | 3 | 3 | 0 | 3 | 3 | 3 | 3 | 3 |
| | | Carbon Dioxide | - | - | - | 1.2 | - | - | - | - | - |
| Production Condition | | Temperature Of Resin Composition (°C) | 230 | 230 | 230 | 230 | 230 | 230 | 230 | 230 | 230 |
| | | Mold Temperature (°C) | 40 | 40 | 40 | 40 | 40 | 40 | 40 | 40 | 40 |
| | | Injection Time (Second) | 3 | 3 | 3 | 3 | 3 | 3 | 3 | 3 | 3 |
| | | Back Pressure (Mpa) | 20 | 20 | 20 | 20 | 20 | 20 | 20 | 20 | 20 |
| | | Retracting Start Time (Second) | 0.5 | 0.5 | 0.5 | 0.5 | 0.5 | 0.5 | 0.5 | 0.5 | 0.5 |
| | | Retracting Rate (mm/sec) | 5 | 5 | 5 | 5 | 5 | 5 | 5 | 5 | 5 |

(continued)

| | | | Example | | | | | | | | |
|---|---|---|---|---|---|---|---|---|---|---|---|
| | | | 1 | 2 | 3 | 4 | 5 | 6 | 7 | 8 | 9 |
| Evaluation | Bending Elastic Gradient (N/10mm) | | 30 | 20 | 20 | 40 | 41 | 37 | 30 | 48 | 51 |
| | High-Rate Plane Impact Test | Puncture Energy ∆E (KJ) | 4.1 | 6.5 | 6.5 | 3.5 | 4 | 7.2 | 15.2 | 9.5 | 12.5 |
| | | Fracture State | YD | YD | YD | YD | YD | YD | YD | YD | YD |
| | Low-Temperature Drop-Ball Impact Strength (J) | | 8.5 | 10 | 10 | 7.5 | 7 | 9 | 12 | 9.5 | 8 |
| | Average Cell Diameter ($\mu$m) | | 80 | 80 | 80 | 50 | 90 | 90 | 90 | 90 | 100 |
| | Ratio Of Thickness Of Foaming Layer (%) | | 80 | 80 | 80 | 90 | 80 | 80 | 80 | 80 | 80 |
| | Void-Forming Ratio | | A | A | A | A | A | A | A | A | B |
| | External Appearance | | C | C | C | C | C | C | C | c | C |

[Table 2]

| | | | Comparative Example | | | | |
|---|---|---|---|---|---|---|---|
| | | | 1 | 2 | 3 | 4 | 5 |
| Mixing Amount (Part By Weight) | Propylene-Based Resin | | 100 | 100 | 100 | 100 | 100 |
| | SEBS | | 0 | 0 | 0 | 0 | 0 |
| | Ethylene-1-Octene Copolymer Elastomer | | 10 | 20 | 30 | 10 | 10 |
| | Inorganic Filler | Talc (Average Particle Diameter 10 $\mu$m) | 10 | 10 | 10 | 15 | 20 |
| | | Calcium Carbonate (Average Particle Diameter 0.2 $\mu$m) | 0 | 0 | 0 | 0 | 0 |
| | Foaming Agent | Sodium Hydrogen Carbonate | 3 | 3 | 3 | 3 | 3 |
| | | Carbon Dioxide | - | - | - | - | - |
| Production Condition | Temperature Of Resin Composition (°C) | | 230 | 230 | 230 | 230 | 230 |
| | Mold Temperature (°C) | | 40 | 40 | 40 | 40 | 40 |
| | Injection Time (Second) | | 3 | 3 | 3 | 3 | 3 |
| | Back Pressure (Mpa) | | 20 | 20 | 20 | 20 | 20 |
| | Retracting Start Time (Second) | | 0.5 | 0.5 | 0.5 | 0.5 | 0.5 |
| | Retracting Rate (mm/sec) | | 5 | 5 | 5 | 5 | 5 |

(continued)

| | | | Comparative Example | | | | |
|---|---|---|---|---|---|---|---|
| | | | 1 | 2 | 3 | 4 | 5 |
| Evaluation | Bending Elastic Gradient (N/10mm) | | 42 | 35 | 27 | 45 | 50 |
| | High-Rate Plane Impact Test | Puncture Energy $\Delta$E (KJ) | 2 | 3.9 | 7.2 | 6.7 | 8.2 |
| | | Fracture State | YS | YS | YS | YS | YS |
| | Low-Temperature Drop-Ball Impact Strength (J) | | 2 | 3 | 3.5 | 3.5 | 4 |
| | Average Cell Diameter ($\mu$m) | | 120 | 120 | 120 | 120 | 150 |
| | Ratio Of Thickness Of Foaming Layer (%) | | 80 | 80 | 80 | 80 | 80 |
| | Void-Forming Ratio | | B | B | B | B | B |
| | External Appearance | | D | D | D | D | E |

[Table 3]

| | | | Example | | | | | |
|---|---|---|---|---|---|---|---|---|
| | | | 10 | 11 | 12 | 13 | 14 | 15 |
| Mixing Amount (Part By Weight) | Propylene-Based Resin | | 100 | 100 | 100 | 100 | 100 | 100 |
| | SEBS | | 5 | 5 | 5 | 5 | 5 | 5 |
| | Ethylene-1-Octene Copolymer Elastomer | | 10 | 10 | 10 | 10 | 10 | 10 |
| | Inorganic Filler | Talc (Average Particle Diameter 10 $\mu$m) | 10 | 10 | 10 | 10 | 10 | 10 |
| | | Calcium Carbonate (Average Particle Diameter 0.2 $\mu$m) | 0 | 0 | 0 | 0 | 0 | 0 |
| | Foaming Agent | Sodium Hydrogen Carbonate | 3 | 3 | 3 | 3 | 3 | 3 |
| | | Carbon Dioxide | - | - | - | - | - | - |
| Production Condition | Temperature Of Resin Composition (°C) | | 230 | 210 | 230 | 230 | 230 | 230 |
| | Mold Temperature (°C) | | 80 | 40 | 40 | 40 | 40 | 40 |
| | Injection Time (Second) | | 3 | 3 | 0.5 | 3 | 3 | 3 |
| | Back Pressure (Mpa) | | 20 | 20 | 20 | 10 | 20 | 20 |
| | Retracting Start Time (Second) | | 0.5 | 0.5 | 0.5 | 0.5 | 0 | 0.5 |
| | Retracting Rate (mm/sec) | | 5 | 5 | 5 | 5 | 5 | 30 |

(continued)

| | | | Example | | | | | |
|---|---|---|---|---|---|---|---|---|
| | | | 10 | 11 | 12 | 13 | 14 | 15 |
| Evaluation | Bending Elastic Gradient (N/10mm) | | 40 | 35 | 35 | 32 | 35 | 35 |
| | High-Rate Plane Impact Test | Puncture Energy ΔE (KJ) | 8 | 6.5 | 7 | 6.5 | 7 | 6.5 |
| | | Fracture State | YD | YD | YD | YD | YD | YD |
| | Low-Temperature Drop-Ball Impact Strength (J) | | 9.5 | 8.5 | 8.5 | 8 | 8.5 | 7 |
| | Average Cell Diameter ($\mu$m) | | 80 | 100 | 100 | 100 | 100 | 100 |
| | Ratio Of Thickness Of Foaming Layer (%) | | 90 | 75 | 85 | 80 | 85 | 80 |
| | Void-Forming Ratio | | A | B | B | B | B | B |
| | External Appearance | | C | C | C | C | C | C |

[Table 4]

| | | | Example | | | | | | |
|---|---|---|---|---|---|---|---|---|---|
| | | | 16 | 17 | 18 | 19 | 20 | 21 | 22 |
| Mixing Amount (Part By Weight) | Propylene-Based Resin | | 100 | 100 | 100 | 100 | 100 | 100 | 100 |
| | SEBS | | 20 | 20 | 20 | 5 | 5 | 20 | 20 |
| | Ethylene-1-Octene Copolymer Elastomer | | 0 | 0 | 0 | 10 | 5 | 5 | 0 |
| | Inorganic Filler | Talc (Average Particle Diameter 10$\mu$m) | 0 | 0 | 10 | 10 | 10 | 10 | 10 |
| | | White Mica (Average Particle Diameter 30 $\mu$m, Average Aspect Ratio 28) | 10 | 0 | 0 | 0 | 0 | 0 | 0 |
| | | Glass Fibers (Fiber Length 1 mm, Fiber Diameter 10 $\mu$ m) | 0 | 10 | 0 | 0 | 0 | 0 | 0 |
| | Foaming Agent | Sodium Hydrogen Carbonate | 3 | 3 | 3 | 3 | 3 | 3 | 3 |
| | | Carbon Dioxide | - | - | - | - | - | - | - |
| | Polyethylene Wax | | 0 | 0 | 2 | 2 | 0 | 2 | 0 |
| Production Condition | Temperature Of Resin Composition (°C) | | 230 | 230 | 230 | 230 | 230 | 230 | 230 |
| | Mold Temperature (°C) | | 40 | 40 | 40 | 40 | 40 | 40 | 40 |
| | Injection Time (Second) | | 3 | 3 | 3 | 3 | 3 | 3 | 3 |
| | Back Pressure (Mpa) | | 20 | 20 | 20 | 20 | 20 | 20 | 20 |
| | Retracting Start Time (Second) | | 0.5 | 0.5 | 0.5 | 0.5 | 0.5 | 0.5 | 0.5 |
| | Retracting Rate (mm/sec) | | 5 | 5 | 5 | 5 | 5 | 5 | 5 |
| | Cavity Internal Pressure (MPa) | | 1.5 | 1.5 | 1.5 | 1 | 1.5 | 1.5 | 1.5 |

(continued)

| | | | Example | | | | | | |
|---|---|---|---|---|---|---|---|---|---|
| | | | 16 | 17 | 18 | 19 | 20 | 21 | 22 |
| Evaluation | Bending Elastic Gradient (N/10mm) | | 35 | 40 | 28 | 33 | 41 | 25 | 27 |
| | High-Rate Plane Impact Test | Puncture Energy $\Delta E$ (KJ) | 5 | 6.5 | 6.5 | 8.5 | 4 | 9 | 6 |
| | | Fracture State | YD | YD | YD | YD | YD | YD | YD |
| | Low-Temperature Drop-Ball Impact Strength (J) | | 7 | 8 | 11 | 10 | 7 | 12 | 10 |
| | Average Cell Diameter ($\mu$m) | | 90 | 70 | 70 | 80 | 90 | 70 | 70 |
| | Ratio Of Thickness Of Foaming Layer (%) | | 80 | 80 | 80 | 80 | 80 | 80 | 80 |
| | Void-Forming Ratio | | A | A | A | A | A | A | A |
| | External Appearance | | B | B | A | A | B | A | B |

Industrial Applicability

The foam-molded article produced by the method for producing a foam-molded article of the present invention has excellent rigidity, impact resistance, and external appearance, and is capable of ductile fracture. Therefore, the foam-molded article of the present invention can be used for applications including automobile interior parts; automobile exterior parts; a seat for a motorcycle; parts in various products such as furniture, architecture materials, consumer electronics, and electronics; containers for transportation; and buffer materials.

(CROSS-REFERENCE TO RELATED APPLICATIONS)

This application claims priority on the basis of Japanese Patent Application No. 2014-112261, filed on May 30, 2014, the entire disclosure of which is incorporated herein by reference.

**Claims**

1. A method for producing a foam-molded article comprising:

   a kneading step of melt-kneading a resin composition in a presence of a foaming agent, the resin composition containing 100 parts by weight of a propylene-based resin, 1 to 30 parts by weight of an aromatic vinyl-based thermoplastic elastomer, and 1 to 30 parts by weight of an inorganic filler; and a foaming step of injecting the resin composition in a molten state into a mold, to foam and mold the resin composition.

2. The method for producing a foam-molded article according to claim 1, wherein the propylene-based resin has a melt flow rate of 30 to 200 g/10 min.

3. The method for producing a foam-molded article according to claim 1 or 2, wherein the aromatic vinyl-based thermoplastic elastomer includes any of a copolymer of an aromatic vinyl-based compound with a conjugated diene compound and a hydrogenated product thereof.

4. The method for producing a foam-molded article according to claim 3, wherein the aromatic vinyl-based compound is contained in an amount of 10 to 30% by weight in the copolymer of the aromatic vinyl-based compound with the conjugated diene compound.

5. The method for producing a foam-molded article according to any one of claims 1 to 4, wherein the resin composition further includes an olefin-based thermoplastic elastomer in an amount of 1 to 30 parts by weight relative to 100 parts by weight of the propylene-based resin.

6. The method for producing a foam-molded article according to claim 5, wherein the olefin-based thermoplastic elastomer includes an ethylene-α-olefin copolymer elastomer.

7. The method for producing a foam-molded article according to claim 6, wherein the ethylene-α-olefin copolymer elastomer has a density of 0.85 to 0.95 g/cm$^3$.

8. The method for producing a foam-molded article according to any one of claims 1 to 7, wherein the inorganic filler includes any of talc and mica.

9. The method for producing a foam-molded article according to claim 8, wherein the talc has an average particle diameter of 0.1 to 20 μm.

10. The method for producing a foam-molded article according to claim 8, wherein the mica has an average particle diameter of 2 to 300 μm and an average aspect ratio of 10 or more.

11. The method for producing a foam-molded article according to any one of claims 1 to 7, wherein the inorganic filler contains a fibrous inorganic filler, and the fibrous inorganic filler has a fiber length of 0.5 to 100 mm and a fiber diameter of 3 to 25 μm.

12. The method for producing a foam-molded article according to any one of claims 1 to 11, wherein the resin composition includes a fluidity improver.

13. The method for producing a foam-molded article according to claim 12, wherein the fluidity improver is a polyethylene wax having a number average molecular weight of 1,000 to 5,000.

14. The method for producing a foam-molded article according to any one of claims 1 to 13, wherein the resin composition is injected into a mold by a counterpressure process to be foamed and molded.

15. A foam-molded article produced by the method according to any one of claims 1 to 14, the foam-molded article having an average cell diameter of 10 to 500 μm.

## INTERNATIONAL SEARCH REPORT

| | International application No. |
|---|---|
| | PCT/JP2015/065464 |

A.   CLASSIFICATION OF SUBJECT MATTER
*C08J9/06*(2006.01)i, *C08K3/34*(2006.01)i, *C08L9/06*(2006.01)i, *C08L23/10*
(2006.01)i, *C08L53/00*(2006.01)i

According to International Patent Classification (IPC) or to both national classification and IPC

B.   FIELDS SEARCHED

Minimum documentation searched (classification system followed by classification symbols)
C08J9/06, C08K3/34, C08L9/06, C08L23/10, C08L53/00

Documentation searched other than minimum documentation to the extent that such documents are included in the fields searched
    Jitsuyo Shinan Koho        1922-1996   Jitsuyo Shinan Toroku Koho   1996-2015
    Kokai Jitsuyo Shinan Koho  1971-2015   Toroku Jitsuyo Shinan Koho   1994-2015

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X | JP 2005-324429 A  (Mitsuboshi Belting Ltd.), 24 November 2005 (24.11.2005), entire text; particularly, claims; paragraphs [0015] to [0036] (Family: none) | 1,3,4,8,9 |
| X Y | JP 2009-001772 A  (Kaneka Corp.), 08 January 2009 (08.01.2009), entire text; particularly, claims; paragraphs [0014], [0029] to [0051] (Family: none) | 1-4,12,14,15 13,14 |

| ☒ Further documents are listed in the continuation of Box C. | ☐ See patent family annex. |
|---|---|

\*    Special categories of cited documents:
"A"   document defining the general state of the art which is not considered   to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
|    31 July 2015 (31.07.15) |    11 August 2015 (11.08.15) |

| Name and mailing address of the ISA/ | Authorized officer |
|---|---|
|    Japan Patent Office 3-4-3,Kasumigaseki,Chiyoda-ku, Tokyo 100-8915,Japan | |
| | Telephone No. |

Form PCT/ISA/210 (second sheet) (July 2009)

# EP 3 150 658 A1

**INTERNATIONAL SEARCH REPORT**

International application No.

PCT/JP2015/065464

| C (Continuation). | DOCUMENTS CONSIDERED TO BE RELEVANT | |
|---|---|---|
| Category* | Citation of document, with indication, where appropriate, of the relevant passages | Relevant to claim No. |
| X<br>Y | JP 2012-001655 A  (Japan Polypropylene Corp.),<br>05 January 2012 (05.01.2012),<br>entire text; particularly, claims; paragraphs<br>[0088] to [0117], [0123] to [0128], [0171] to<br>[0184]<br>(Family: none) | 1-12,15<br>13,14 |
| X<br>Y | JP 2010-150509 A  (Japan Polypropylene Corp.),<br>08 July 2010 (08.07.2010),<br>entire text; particularly, claims; paragraphs<br>[0037], [0051] to [0073], [0080] to [0085]<br>(Family: none) | 1-3,5,6,<br>8-12,15<br>13,14 |
| Y | JP 2008-088283 A  (Nitto Denko Corp.),<br>17 April 2008 (17.04.2008),<br>entire text; particularly, claims; paragraphs<br>[0043] to [0044]<br>& US 2010/0016458 A1      & WO 2008/041617 A1<br>& EP 2070976 A1            & KR 10-2009-0073127 A<br>& CN 101522769 A          & TW 200838912 A<br>& AT 556109 T | 13 |
| Y | JP 2007-538124 A  (Benecke-Kaliko AG),<br>27 December 2007 (27.12.2007),<br>entire text; particularly, claims; paragraphs<br>[0014] to [0015]<br>& JP 5068165 B            & WO 2005/113655 A1<br>& EP 1761591 A            & DE 102004025157 A | 13 |
| Y | JP 2004-502810 A  (Sika Corp.),<br>29 January 2004 (29.01.2004),<br>entire text; particularly, claims; paragraph<br>[0018]<br>& US 6319964 B1          & US 2002/0091171 A1<br>& WO 2002/002677 A1      & EP 1305359 A<br>& AU 4749801 A            & CA 2413031 A<br>& MX PA02012585 A | 13 |
| Y | JP 2001-162660 A  (The Japan Steel Works, Ltd.),<br>19 June 2001 (19.06.2001),<br>entire text; particularly, claims; fig. 1 to 5<br>(Family: none) | 14 |
| Y | JP 10-230528 A  (Mitsui Chemicals, Inc.),<br>02 September 1998 (02.09.1998),<br>entire text; particularly, claims; paragraph<br>[0066]; fig. 1 to 5<br>& JP 2006-69215 A        & US 5997781 A<br>& EP 799853 A1            & DE 69724688 D<br>& DE 69724688 T          & TW 438848 B<br>& KR 10-0200201 B        & CN 1170662 A<br>& MY 119010 A | 14 |

Form PCT/ISA/210 (continuation of second sheet) (July 2009)

## INTERNATIONAL SEARCH REPORT

International application No.

PCT/JP2015/065464

C (Continuation).   DOCUMENTS CONSIDERED TO BE RELEVANT

| Category* | Citation of document, with indication, where appropriate, of the relevant passages | Relevant to claim No. |
|---|---|---|
| A | Product Data Sheet [online], HRD Coproration, 2015.07.30, [retrieval date 2015.07.30], Internet<URL:http://www.marcusoil.com/ polyethylene_wax_datasheet.html> | 13 |
| A | Dow Specialty Elastomers for Thermoplastic Polyolefins, The Dow Chemical Company [online], 2013.08.31, p.6, [retrieval date 2015.07.30], Internet<URL:http://msdssearch.dow.com/ PublishedLiteratureDOWCOM/dh_08e0/0901b803808 e05ab.pdf?filepath=elastomers/pdfs/noreg/777- 01101%20.pdf&fromPage=GetDoc> | 7 |
| A | JP 2013-119395 A (Japan Polypropylene Corp.), 17 June 2013 (17.06.2013), entire text; particularly, claims; paragraphs [0044] to [0049] (Family: none) | 2 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008142997 A
- JP HEI07500622 W
- JP 2014112261 A